# EUROPÄISCHE PATENTSCHRIFT

(11) **EP 4 257 279 B1**
(45) Veröffentlichungstag und Bekanntmachung des Hinweises auf die Patenterteilung: **11.06.2025**
(21) Anmeldenummer: 23158906.0
(22) Anmeldetag: 28.02.2023
(51) Int. Cl.: B23K 11/11, B23B 5/16, B23K 11/30

(54) **REINIGUNGSVORRICHTUNG ZUR REINIGUNG EINER SCHWEISSELEKTRODE EINES SCHWEISSWERKZEUGS UND VERFAHREN ZUM REINIGEN EINER SCHWEISSELEKTRODE**
CLEANING DEVICE FOR CLEANING A WELDING ELECTRODE OF A WELDING TOOL AND METHOD OF CLEANING A WELDING ELECTRODE
DISPOSITIF DE NETTOYAGE POUR NETTOYER UNE ÉLECTRODE DE SOUDAGE D'UN OUTIL DE SOUDAGE ET PROCÉDÉ DE NETTOYAGE D'UNE ÉLECTRODE DE SOUDAGE

(30) Priorität: 17.03.2022 DE 102022202659
(43) Veröffentlichungstag der Anmeldung: 11.10.2023
(73) Patentinhaber: Robert Bosch GmbH, 70442 Stuttgart (DE)
(72) Erfinder: Mader, Andreas, 64720 Michelstadt (DE); Stolze, Josephine, 97816 Lohr A. Main (DE); Zeller, Sebastian, 64753 Brombachtal (DE); Haeufgloeckner, Juergen, 63936 Schneeberg (DE); Ripper, Michael, 64385 Beerfurth (DE)

(56) Entgegenhaltungen:
- DE-A1- 10 345 714
- DE-A1- 102018 216 885
- US-A1- 2011 266 260
- US-A1- 2016 023 296

## Beschreibung

Die vorliegende Erfindung bezieht sich auf eine Reinigungsvorrichtung zur Reinigung einer Schweißelektrode eines Schweißwerkzeugs und ein Verfahren zum Reinigen einer Schweißelektrode, mit welchen sich die Standzeit einer Schweißelektrode, insbesondere deren Schweißelektrodenkappe, erhöhen lässt.

Beispielsweise im automatisierten Karosserierohbau werden metallische Teile durch Schweißen mit Hilfe eines Schweißwerkzeugs einer Schweißvorrichtung verbunden. Das Schweißwerkzeug ist beispielsweise eine Schweißzange, die von einem Schweißtransformator mit einem elektrischen Schweißstrom versorgt wird. Insbesondere ist das Schweißwerkzeug ein Widerstandsschweißwerkzeug.

Häufig wird als Schweißwerkzeug eine Schweißzange mit Elektrodenkappen eingesetzt. Die Elektrodenkappen verschmutzen durch den Schweißprozess, da sich Beschichtungen der zu verschweißenden Bleche an den Kappen ablagern. Zusätzlich tritt eine Verschmutzung durch den thermischen Prozess beim Schweißen ein. Der Verschmutzungsgrad der Elektrodenkappe beeinflusst die Schweißqualität. Somit sind die Elektrodenkappen in bestimmten Zeitabschnitten zu reinigen oder auszuwechseln, um eine vorgegebene und gleichbleibende Schweißqualität zu erreichen. US 2011/0266260 A1 beschreibt hierfür eine Erfassungseinrichtung, welche die Länge einer verschmutzten Elektrode misst.

Gemäß der DE 10 2018 216 885 A1 oder DE 103 45 714 A1 oder US 2016/0023296 A1 (offenbarend den Oberbegriff der Ansprüche 1, 10 und 14) erfolgt die Reinigung der Elektrodenkappen üblicherweise mittels Schneidfräser, welcher den verschmutzten Teil der Elektrodenkappe abschneidet oder abfräst. Für die Reinigung wird ein Schneidmesser des Elektrodenfräsers verwendet. Derzeit kann eine Elektrodenkappe etwa 20 bis 50mal gereinigt, insbesondere abgeschnitten bzw. gefräst, werden. Danach muss sie gegen eine neue Elektrodenkappe gewechselt werden. Während der Zeit der Reinigung der Elektrodenkappe oder einem Kappenwechsel steht das Schweißwerkzeug nicht zum Schweißen zur Verfügung.

Auch das Reinigungswerkzeug, insbesondere das Schneidmesser des Elektrodenfräsers, unterliegt einem Verschleiß. Mit zunehmendem Einsatz werden die Schneidmesser stumpf. Je nach Produktionsablauf muss das Messer nach 1000 bis 2000 Reinigungsvorgängen gewechselt werden.

Problematisch ist, dass Schweißgut oder Werkstücke je nach Werkstoff/Material und/oder Dicke und/oder Beschichtung einen unterschiedlichen Verschmutzungsgrad der Elektrodenkappe zur Folge haben. Dadurch ist beispielsweise beim Schweißen von Stahl mit einer Gesamtblechstärke kleiner 1,8 mm eine Elektrodenkappe etwa nach jeweils 100 Schweißpunkten zu reinigen. Dagegen ist beim Schweißen von Stahl mit einer Blechstärke von 3 mm eine Elektrodenkappe etwa nach jeweils 400 Schweißpunkten zu reinigen. Noch dazu muss eine Elektrodenkappe beim Schweißen einer feuerverzinkten Beschichtung oder einer Beschichtung aus Aluminium-Silizium (Al-Si-Beschichtung) häufiger gereinigt werden als bei einer organischen Beschichtung. Beim Schweißen von Aluminium-Materialverbindungen kann, bedingt durch das hohe Anlegierungsverhalten des Werkstoffs, die maximale Schweißpunktanzahl zwischen den Elektroden-Reinigungszyklen bis auf 20 Schweißpunkte sinken.

Ein anderes Problem besteht darin, dass in Produktionsanlagen, wie beispielsweise Fertigungsstraßen für Fahrzeuge usw. mehrere Fahrzeugmodelle auf einer Fertigungslinie unter Verwendung desselben Schweißwerkzeugs gefertigt werden. Je nachdem, wie die Fahrzeugmodelle auf dieser Produktionslinie einlaufen, sind die unterschiedlichsten Blechkombinationen zu verschweißen. Die Reihenfolge der zu schweißenden Materialkombinationen innerhalb des definierten Reinigungsintervalls der Elektrodenkappen ist vollkommen willkürlich. Damit ändert sich ständig die Blechdicke, Beschichtung und damit auch die Schweißparameter was den Verschleiß der Elektrodenkappe(n) beeinflusst. Der Verschmutzungsgrad der Elektrodenkappen ist vor jedem durchzuführenden Reinigungsvorgang unterschiedlich und undefiniert, was das Ergebnis der Reinigung und den Verschleiß des Reinigungswerkzeugs, insbesondere eines Fräsmessers, unvorhersehbar macht.

Für einen stabilen Produktionsablauf und eine gleichbleibende Schweißqualität sind das Funktionieren und die Stabilität der Reinigung des Schweißwerkzeugs, genauer dessen Elektrodenkappe(n), sehr wichtig. In der Produktion unterliegt die Reinigung vielen Störgrößen. Das Reinigungswerkzeug, insbesondere Fräs- und/oder Schneidmesser, wird über seine Lebensdauer stumpf, das Fräswerkzeug kann mit Spänen verstopfen oder der eigentliche Fräsvorgang zu kurz sein oder mit schwankendem Anpressdruck ausgeführt werden. Aus diesem Grund ist es sehr wichtig, den Reinigungsvorgang zu überwachen und in einer gleichmäßigen Qualität abzubilden.

Um die Schweißqualität abzusichern, müssen daher die Gesamtzahl der Reinigungszyklen, insbesondere Fräszyklen, für ein Elekrodenmesser und die Anzahl der Reinigungszyklen, insbesondere Fräszyklen, für eine Elektrodenkappe so klein eingestellt werden und die Verkürzung, insbesondere die Abfräslänge, der Elektrodenkappe durch den Reinigungsvorgang so groß eingestellt werden, dass auch der schlechteste Produktionsfall zu einem guten Reinigungsergebnis führt. Das bedeutet, dass die Elektrodenkappen der Schweißzange und auch das Reinigungswerkzeug häufiger gewechselt werden als eventuell tatsächlich notwendig. Dadurch entstehen hohe Kosten, die sich durch die große Anzahl von benötigten Elektrodenkappen und Reinigungswerkzeuge ergeben. Zum anderen reduziert die Zeit für den Reinigungsvorgang und den Wechsel des Reinigungswerkzeugs die eigentliche Produktionszeit und erhöht dadurch die Produktionskosten.

Noch dazu bedingt die Reinigung des Schweißwerkzeugs häufige Ausfallzeiten des Schweißwerkzeugs für die Durchführung von Schweißvorgängen. Daher sind oft mindestens zwei Schweißwerkzeuge vorzuhalten, die von einem Roboter geführt werden, um die vorgegebene Taktung für die Bearbeitung in der Fertigungsstraße erfüllen zu können. Auch dies verursacht erhöhte Kosten für die Fertigungsanlage und erhöhte Betriebskosten.

Es ist daher Aufgabe der vorliegenden Erfindung, eine Reinigungsvorrichtung zur Reinigung einer Schweißelektrode eines Schweißwerkzeugs und ein Verfahren zum Reinigen einer Schweißelektrode bereitzustellen, mit welchen die zuvor genannten Probleme gelöst werden können. Insbesondere sollen eine Reinigungsvorrichtung zur Reinigung einer Schweißelektrode eines Schweißwerkzeugs und ein Verfahren zum Reinigen einer Schweißelektrode bereitgestellt werden, welche sicherstellen, dass beim Schweißen mit dem Schweißwerkzeug kostengünstig eine Schweißverbindung mit guter Schweißqualität erzielt wird.

Diese Aufgabe wird durch eine Reinigungsvorrichtung zur Reinigung einer Schweißelektrode eines Schweißwerkzeugs nach Anspruch 1 gelöst. Die Reinigungsvorrichtung hat ein Reinigungswerkzeug zum Reinigen der Schweißelektrode bei einem Reinigungsvorgang an einer Schweißstromzuführfläche, die zum Zuführen eines Schweißstroms zu mindestens einem zu schweißenden Werkstück vorgesehen ist, eine Steuereinrichtung zur Steuerung des Reinigungsvorgangs, bei welchem Verschmutzung an der Schweißstromzuführfläche durch Kürzen einer Länge der Schweißelektrode beseitigt wird, so dass der Reinigungsvorgang mindestens einen ersten Zeitabschnitt und einen sich an den ersten Zeitabschnitt anschließenden zweiten Zeitabschnitt aufweist, und eine Erfassungseinrichtung, wobei die Steuereinrichtung zudem ausgestaltet ist, das Reinigungswerkzeug in dem zweiten Zeitabschnitt unter Verwendung von mindestens einem Parameter anzusteuern, der auf der Grundlage eines Reinigungsergebnisses der Reinigung der Schweißstromzuführfläche in dem ersten Zeitabschnitt eingestellt wurde. Die Erfassungseinrichtung dient zur Erfassung, **während des** von der **Reinigungsvorrichtung durchgeführten Reinigungsvorgangs,** einer Länge der Schweißelektrode nach mindestens dem ersten Zeitabschnitt, wobei die Steuereinrichtung ausgestaltet ist, das Reinigungswerkzeug in dem zweiten Zeitabschnitt unter Verwendung von mindestens einem Parameter anzusteuern, der auf der Grundlage des nach dem ersten Zeitabschnitt erfassten Erfassungsergebnisses der Erfassungseinrichtung eingestellt wurde, wie in Anspruch 1 erwähnt.

Die Reinigungsvorrichtung führt somit eine adaptive Anpassung der Verkürzung oder Reduktion einer Elektrode, insbesondere ihrer Elektrodenkappe, während eines Reinigungsvorgangs der Elektrode, insbesondere ihrer Elektrodenkappe, aus. Insbesondere erfolgt eine adaptive Anpassung der Abfräslänge innerhalb eines Fräsvorgangs durch die Reinigungsvorrichtung. Damit wird immer genau die Länge der Elektrode, insbesondere ihrer Elektrodenkappe, entfernt, die für eine optimale Reinigung notwendig ist.

Daher ermöglicht die Reinigungsvorrichtung, die Anzahl der Reinigungsvorgänge oder Reinigungszyklen, die für eine Elektrode, insbesondere ihrer Elektrodenkappe, vorgenommen werden können, an den Produktionsprozess anzupassen und zu optimieren. In Folge dessen wird die Elektrode, insbesondere ihre Elektrodenkappe, nur dann gewechselt, wenn dies auch notwendig ist. Dadurch können mit der Elektrode/Elektrodenkappe mehr Schweißvorgänge als bisher ausgeführt werden. Die Reinigungsvorrichtung arbeitet dabei mit sehr geringem Aufwand und sehr kostengünstig und außerdem mit Schonung von Ressourcen.

Auf diese Weise kann die Anzahl von möglichen Reinigungsvorgängen erhöht und damit die Standzeit der Elektroden/Elektrodenkappen verlängert werden, da diese seltener auszutauschen sind. Zum anderen kann die Qualität der Produktion mit der Schweißanlage verbessert werden, so dass weniger fehlerhafte Produkte produziert werden, die auszusortieren sind. Alles dies trägt mit zur Schonung von Ressourcen und zur Kostensenkung für die Herstellung und den Betrieb des Schweißwerkzeugs und somit einer übergeordneten Schweißanlage und/oder industriellen Anlage bei. Die Reinigungsvorrichtung ist somit besonders vorteilhaft bei einer Schweißanlage einsetzbar, die für wechselnde Schweißaufgaben eingesetzt wird, wie beispielsweise in Produktionsanlagen, wie Fertigungsstraßen für Fahrzeuge oder sonstige Produkte.

Ein anderer Vorteil der zuvor beschriebenen Reinigungsvorrichtung besteht darin, dass die Störgröße Reinigungswerkzeugverschleiß, insbesondere Fräsmesserverschleiß, der Reinigungsvorrichtung durch die Anpassung der Verkürzung, insbesondere Abfräslänge, der Elektrodenkappen innerhalb eines Reinigungszyklus ausgeglichen wird. Dadurch wird die Lebensdauer oder Standzeit des Reinigungswerkzeugs erhöht. Dies wird dadurch erreicht, dass der Verschleiß des Reinigungswerkzeugs gemessen und ausgeglichen wird. Dabei wird berücksichtigt, dass die zuvor beschriebene Varianz der Materialien bzw. Werkstoffe und deren Beschichtungen auch die Härte der Anlegierungsschicht auf den Elektroden bzw. deren Kappen und damit das Ergebnis der Reinigung der Elektrode/Elektrodenkappe bestimmt. Je härter die Verschmutzung einer Kappe ist, desto geringer ist die tatsächliche Abfräslänge eines Fräsvorgangs bei der Reinigung der Elektrodenkappe und desto größer ist die Abnutzung des Reinigungswerkzeugs, insbesondere eines Fräsmessers.

Noch dazu ist die Reinigungsvorrichtung für eine vorausschauende Instandhaltung des Reinigungswerkzeugs, insbesondere Fräsmesser, ausgestaltet.

Vorteilhafte weitere Ausgestaltungen der Reinigungsvorrichtung sind in den abhängigen Ansprüchen angegeben.

Denkbar ist, dass das Reinigungswerkzeug zum Reinigen einer Elektrodenkappe der Schweißelektrode ausgestaltet ist, und wobei die Schweißstromzuführfläche Teil der Elektrodenkappe ist.

In einer speziellen Ausgestaltung ist die Steuereinrichtung ausgestaltet, auf der Grundlage des Erfassungsergebnisses der Erfassungseinrichtung zu bestimmen, wann die Elektrodenkappe der Schweißelektrode auszuwechseln ist.

In einer anderen speziellen Ausgestaltung ist die Steuereinrichtung ausgestaltet, auf der Grundlage mindestens einer Änderung der in den Zeitabschnitten verwendeten Parameter zu bestimmen, wann das Reinigungswerkzeug oder sein Werkzeugelement auszuwechseln ist.

Der mindestens eine Parameter kann mindestens einen der folgenden Parameter aufweisen, nämlich Anpresskraft des Reinigungswerkzeugs an der zu reinigenden Schweißstromzuführfläche in dem ersten Zeitabschnitt, Anzahl der Umdrehungen eines Werkzeugelements des Reinigungswerkzeugs in dem ersten Zeitabschnitt, Geschwindigkeit des Reinigungswerkzeugs in dem ersten Zeitabschnitt, zeitliche Länge des ersten Zeitabschnitts.

Alle Zeitabschnitte eines Reinigungsvorgangs können jeweils dieselbe Abmessung haben. Hierbei ist die Abmessung der Zeitabschnitte möglicherweise gleich einer vorbestimmten zeitlichen Länge. Alternativ ist die Abmessung der Zeitabschnitte gleich mindestens einer Umdrehung eines Werkzeugelements des Reinigungswerkzeugs.

Das Reinigungswerkzeug kann einen Schneidfräser oder ein Schneidmesser aufweisen oder ein Laserschneidwerkzeug sein.

Gemäß einem Ausführungsbeispiel ist die Steuereinrichtung ausgestaltet, die Anpresskraft des Reinigungswerkzeugs an der zu reinigenden Schweißstromzuführfläche und die Geschwindigkeit des Reinigungswerkzeugs in dem mindestens einen ersten Zeitabschnitt und dem darauf folgenden zweiten Zeitabschnitt variabel anzusteuern, um einen Restspan oder Schneidrückstand auf der Schweißstromzuführfläche zu verhindern.

Die zuvor beschriebene Reinigungsvorrichtung kann Teil einer Schweißanlage für eine industrielle Anlage sein (siehe Anspruch 10), die zudem aufweist: ein Schweißwerkzeug zur Herstellung mindestens einer Schweißverbindung an mindestens einem Werkstück mit mindestens einer Schweißelektrode, einen Schweißtransformator zum Versorgen des Schweißwerkzeugs mit einem Schweißstrom zur Herstellung der Schweißverbindung, eine Schweißsteuerung zur Steuerung des Schweißtransformators und des Schweißwerkzeugs der Schweißanlage, und eine Überwachungseinrichtung zur Überwachung der Schweißqualität der mit dem Schweißwerkzeug hergestellten Schweißverbindung und Ausgabe einer Meldung in Bezug auf das Überwachungsergebnis.

Die Schweißanlage kann das Schweißwerkzeug und die Reinigungsvorrichtung derart steuern, dass die Reinigungsvorrichtung die Schweißstromzuführfläche mit dem Reinigungswerkzeug reinigt, wenn ein Überwachungsergebnis der Überwachungseinrichtung ergibt, dass die Schweißqualität der mit dem Schweißwerkzeug hergestellten Schweißverbindung ein vorbestimmtes Kriterium nicht erfüllt.

Optional ist die Überwachungseinrichtung extern von einer Steuereinrichtung der Schweißsteuerung vorgesehen. Zusätzlich oder alternativ ist eine Bedienvorrichtung zur Ausgabe der Meldung in Bezug auf das Überwachungsergebnis als durch menschliche Sinne wahrnehmbare Ausgabe vorgesehen. Zusätzlich oder alternativ ist die Schweißanlage ausgestaltet, eine Parametrierung der von der Überwachungseinrichtung durchzuführenden Überwachung über eine Bedienvorrichtung vorzunehmen.

Die zuvor beschriebene Schweißanlage hat möglicherweise zudem eine Vorrichtung, die einen Arm zum Bewegen des Schweißwerkzeugs im Raum und eine Vorrichtungssteuereinrichtung zur Steuerung des Arms aufweist, wobei die Vorrichtungssteuereinrichtung der Schweißsteuerung untergeordnet ist. Zusätzlich oder alternativ kann die Erfassungseinrichtung zur Erfassung von Größen beim Herstellen einer Schweißverbindung mit dem Schweißwerkzeug ausgestaltet sein, wobei die Schweißsteuerung ausgestaltet ist, die erfassten Größen beim Steuern des Schweißwerkzeugs zu berücksichtigen.

Die Aufgabe wird zudem durch ein Verfahren zum Reinigen einer Schweißelektrode für ein Schweißwerkzeug nach Anspruch **14** gelöst. Das Schweißwerkzeug ist zur Herstellung mindestens einer Schweißverbindung an mindestens einem Werkstück vorgesehen, wobei das Verfahren die Schritte aufweist: Reinigen, mit einem Reinigungswerkzeug, der Schweißelektrode bei einem Reinigungsvorgang an einer Schweißstromzuführfläche, die zum Zuführen eines Schweißstroms zu mindestens einem zu schweißenden Werkstück vorgesehen ist, **und Erfassen,** wobei der Reinigungsvorgang, bei welchem Verschmutzung an der Schweißstromzuführfläche durch Kürzen einer Länge der Schweißelektrode beseitigt wird, durch eine Steuereinrichtung derart gesteuert wird, dass der Reinigungsvorgang mindestens einen ersten Zeitabschnitt und einen darauf folgenden zweiten Zeitabschnitt aufweist, und wobei die Steuereinrichtung das Reinigungswerkzeug in dem zweiten Zeitabschnitt unter Verwendung von mindestens einem Parameter ansteuert, der auf der Grundlage eines Reinigungsergebnisses der Reinigung der Schweißstromzuführfläche in dem ersten Zeitabschnitt eingestellt wurde, wie in Anspruch **14** erwähnt.

Das Verfahren erzielt die gleichen Vorteile, wie sie zuvor in Bezug auf die Reinigungsvorrichtung und deren übergeordnete Anlage genannt sind.

Weitere mögliche Implementierungen der Erfindung umfassen auch nicht explizit genannte Kombinationen von zuvor oder im Folgenden bezüglich des Ausführungsbeispiels beschriebenen Merkmale oder Ausführungsformen. Dabei wird der Fachmann auch Einzelaspekte als Verbesserungen oder Ergänzungen zu der jeweiligen Grundform der Erfindung hinzufügen.

Nachfolgend ist die Erfindung unter Bezugnahme auf die beiliegende Zeichnung und anhand von Ausführungsbeispielen näher beschrieben. Es zeigen:
Fig. 1 eine stark vereinfachte schematische Ansicht einer industriellen Anlage gemäß einem ersten Ausführungsbeispiel mit einer Schweißanlage, die ein Schweißwerkzeug verwendet;
Fig. 2 eine Teilschnittansicht eines Schweißwerkzeugs in einer Reinigungsvorrichtung für das Schweißwerkzeug gemäß dem ersten Ausführungsbeispiel;
Fig. 3 ein Beispiel für einen zeitlichen Verlauf einer Reinigung des Schweißwerkzeugs in der Reinigungsvorrichtung gemäß dem ersten Ausführungsbeispiel; und
Fig. 4 eine Teilschnittansicht eines Schweißwerkzeugs in einer Reinigungsvorrichtung für das Schweißwerkzeug gemäß einem zweiten Ausführungsbeispiel.

In den Figuren sind gleiche oder funktionsgleiche Elemente, sofern nichts anderes angegeben ist, mit denselben Bezugszeichen versehen.

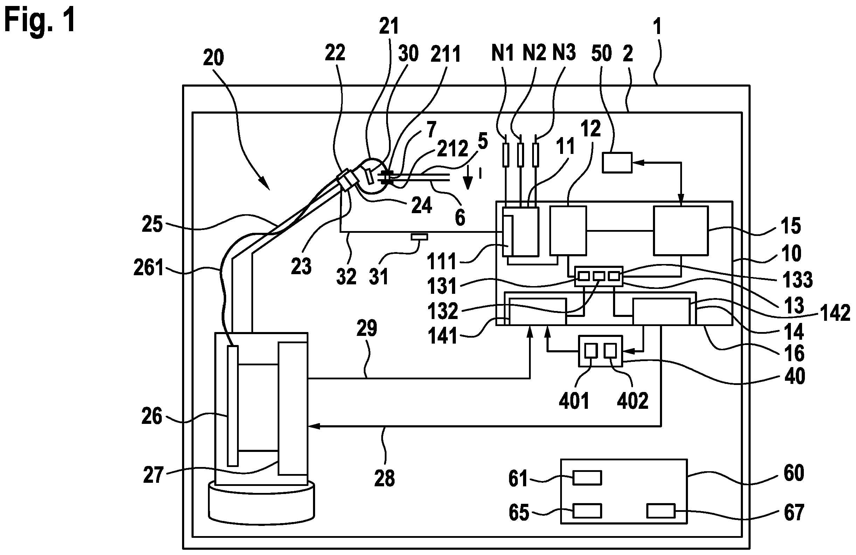

Fig. 1 zeigt eine industrielle Anlage 1 mit einer Schweißanlage 2. Die industrielle Anlage 1 ist beispielsweise eine Fertigungsstraße für Fahrzeuge, Möbel, Bauwerke, usw., in welcher metallische Werkstücke 5, 6 durch Schweißen derart verbunden werden, dass eine Schweißverbindung 7 hergestellt wird. Insbesondere kann jedoch eine Schweißverbindung 7 nur an einem Werkstück 5 hergestellt werden, indem zwei Ränder des Werkstücks 5 mit der Schweißverbindung 7 miteinander verbunden werden. Die Werkstücke 5, 6 sind aus einem beliebigen schweißbaren Material, beispielsweise Stahl, Aluminium, Legierungen davon, mit oder ohne Beschichtung, usw. auswählbar. Hierbei sind beliebige Kombinationen von Materialien und/oder Beschichtungen möglich.

Die Schweißanlage 2 hat unter anderem eine Schweißsteuerung 10, eine Vorrichtung 20 zum Führen eines Schweißwerkzeugs 21, ein Frontend bzw. eine Erfassungseinrichtung 30, eine Bedienvorrichtung 40 und eine übergeordnete Steuervorrichtung 50, welche die Schweißanlage 2 und/oder andere nicht dargestellte Komponenten der industriellen Anlage 1 steuern kann. Derartige Komponenten sind beispielsweise eine Transporteinrichtung zum Transportieren von insbesondere mindestens einem der Werkstücke 5, 6, eine oder mehrere weitere Schweißanlage(n), ein oder mehrere sonstige Werkzeug(e), wie beispielsweise ein Schraubwerkzeug, ein Nietwerkzeug, ein Bohrwerkzeug, ein Stanzwerkzeug, usw. Zudem hat die Schweißanlage 2 eine Reinigungsvorrichtung 60 zum Reinigen des Schweißwerkzeugs 21 mit einem Reinigungswerkzeug 61, was nachfolgend ausführlicher beschrieben ist.

Die Schweißanlage 2 ist insbesondere eine Widerstandsschweißanlage. In diesem Fall ist das Schweißwerkzeug 21 insbesondere ein Widerstandsschweißwerkzeug. Hierbei werden die zu verschweißenden Materialien oder wird die zu verschweißende Materialkombination mittels einer vorbestimmten Zangenkraft vorgespannt, wobei der notwendige Schweißstrom I für eine definierte Zeit an eine Position an dem mindestens einen Werkstück 5, 6 gebracht wird, um mindestens eine Schweißverbindung 7, insbesondere einen Schweißpunkt, herzustellen.

Die Schweißsteuerung 10 umfasst ein Leistungsteil 11, das auch Umrichter genannt wird, eine Schnittstelle 111, eine Steuereinrichtung 12, eine Speichereinrichtung 13 zur Speicherung von Daten 31, 131 bis 133, eine Kommunikationseinrichtung 14 mit einer Eingangsschnittstelle 141 und einer Ausgangsschnittstelle 142, eine Überwachungseinrichtung 15 sowie ein Gehäuse 16. Das Gehäuse 16 ist insbesondere ein Schaltschrank, in welchen die Schweißsteuerung 10 eingebaut ist. Zum Abführen von Wärme aus dem Gehäuse 16 der Schweißsteuerung 10 ist bei Bedarf eine nicht dargestellte Kühleinrichtung vorgesehen. Der Umrichter 11 ist vorzugsweise in die Schweißsteuerung 10 integriert, kann jedoch alternativ separat von der Schweißsteuerung 10 vorgesehen sein.

Die Vorrichtung 20 von Fig. 1 kann insbesondere ein Schweißroboter sein. Die Vorrichtung 20 bewegt das Schweißwerkzeug 21 zu einer Fügestelle an dem mindestens einen Werkstück 5, 6. Außerdem hält oder bewegt die Vorrichtung 20 das Schweißwerkzeug 21 an der Fügestelle entsprechend, um mit dem Schweißwerkzeug 21 beispielsweise einen Schweißpunkt und/oder eine Schweißnaht als Schweißverbindung 7 herzustellen. Das Schweißwerkzeug 21 ist beispielsweise eine Schweißzange mit mindestens zwei Schweißelektroden 211, 212, die jeweils an ihrem freien Ende mit einer Schweißelektrodenkappe ausgestattet sind. Die Ausgestaltung der Schweißelektroden 211, 212 mit einer zugehörigen Schweißelektrodenkappe ist nachfolgend noch genauer beschrieben.

Das Frontend bzw. die Erfassungseinrichtung 30 sind Teil(e) des Schweißwerkzeugs 21, insbesondere Teil(e) einer Schweißzange.

Gemäß Fig. 1 wird das Schweißwerkzeug 21 über einen Umrichter bzw. ein Leistungsteil 11 und einen Schweißtransformator 23, an den ein Gleichrichter 24 angebaut ist, mit einem elektrischen Strom zum Schweißen versorgt, dem sogenannten Schweißstrom I. Hierfür wird das Leistungsteil 11 von einem dreiphasigen Spannungsnetz mit Netzphasen N1, N2, N3 mit einer elektrischen Spannung U versorgt. Das Leistungsteil 11 versorgt den Schweißtransformator 23 primärseitig insbesondere mit einem Dreiphasenwechselstrom mit einer Frequenz von 50 Hz und einer Spannung von 400V oder 690V. Der Gleichrichter 24 dient zum sekundärseitigen Gleichrichten des Dreiphasenwechselstroms. Daher ist der Gleichrichter 24 mit dem Ausgang des Schweißtransformators 23 verbunden. Der Schweißtransformator 23 führt dem Schweißwerkzeug 21 mit Hilfe des Gleichrichters 24 somit einen Gleichstrom als Schweißstrom I zu. Der Schweißtransformator 23 ist beispielsweise als Mittelfrequenz-Schweißtransformator ausgeführt.

Die Schweißsteuerung 10 regelt den Schweißstrom I, der vom Schweißwerkzeug 21 beim Herstellen einer Schweißverbindung 7 geliefert wird.

Beim Führen des Schweißwerkzeugs 21 mit einem Arm 25 der Vorrichtung 20 wird die Vorrichtung 20 von ihrer Steuereinrichtung 26 gesteuert, die auch als Robotersteuerung bezeichnet wird. Hierfür ist die Steuereinrichtung 26 mit der Schweißsteuerung 10 über eine Kommunikationseinrichtung 27 mit Hilfe einer ersten Verbindungsleitung 28 und einer zweiten Verbindungsleitung 29 verbunden. Über die Verbindungsleitungen 28, 29 sind relevante Daten für die Durchführung eines Schweißvorgangs mit dem Schweißwerkzeug 21 zwischen der Schweißsteuerung 10 und der Vorrichtung 20, genauer gesagt der Steuereinrichtung 26, austauschbar. Zudem können Parameter der Steuereinrichtung 26, mit welchen das Schweißwerkzeug 21 gesteuert wird, in der Speichereinrichtung 13 gespeicherte interne Grundparameter oder Sollwerte 131 sein. Es sind beliebige andere interne Grundparameter und/oder Sollwerte 131 denkbar.

Die Erfassungseinrichtung 30 erfasst im Betrieb der Schweißanlage 2 die Erfassungsdaten 31, die über eine Verbindungsleitung 32 an die Schweißsteuerung 10 übertragen und in der Speichereinrichtung 13 gespeichert werden. Die Erfassungsdaten 31 ergeben sich aufgrund einer kontinuierlichen Erfassung von Daten des Schweißwerkzeugs 21 und/oder des Schweißtransformators 23 und/oder des Gleichrichters 24 und/oder des mindestens einen Werkstücks 5, 6. Hierbei kann die Erfassung beim Herstellen einer Schweißverbindung 7 entweder ununterbrochen oder mit einer vorbestimmten Abtastrate erfolgen.

Die Übertragung der Erfassungsdaten 31 des Schweißwerkzeugs 21 und/oder des Schweißtransformators 23 und/oder des Gleichrichters 24 und/oder des mindestens einen Werkstücks 5, 6 zwischen dem Schweißwerkzeug 21 und der Schweißsteuerung 10 und/oder der Steuereinrichtung 26 erfolgt mit Hilfe einer Frontend-Schnittstelle 22 und der Schweißsteuerung-Schnittstelle 111.

Die Erfassungsdaten 31 werden von der Steuereinrichtung 12 verwendet. Zusätzlich sind die Erfassungsdaten 31 mit der Bedienvorrichtung 40 von Fig. 1 anzeigbar.

Zudem sind über die Bedienvorrichtung 40 Hinweise für einen Bediener in Bezug auf den Status der Schweißanlage 2 und/oder einer ihrer zuvor genannten Komponenten ausgebbar. Der Status der Schweißanlage 2 umfasst unter anderem mindestens eine Fehlermeldung 401 über einen Fehler, der im Betrieb der Schweißanlage 2 gegebenenfalls auftritt. Zudem sind die Erfassungsdaten 31 als Betriebsanzeige 402 mit der Bedienvorrichtung 40 anzeigbar. Die Bedienvorrichtung 40 ist beispielsweise eine Tastatur und/oder eine Maus, ein Laptop, ein berührungsempfindlicher oder berührungsunempfindlicher Bildschirm, usw. oder deren Kombinationen. Die mindestens eine Bedienvorrichtung 40 kommt zudem insbesondere zur Bedienung der Schweißanlage 2 und zur Parametrierung der Elektrodenpflege des Schweißwerkzeugs 21 mit der Reinigungsvorrichtung 60 und Nachstellung der Elektroden 211, 212 zum Einsatz.

Die Überwachungseinrichtung 15 verwendet die Daten 31, 131, um auszuwerten, ob die Steuerung der Schweißanlage 2 zu den gewünschten Ergebnissen führt oder nicht. Das Ergebnis der Überwachung wird als Daten 132 in der Speichereinrichtung 13 gespeichert und/oder mit der Bedienvorrichtung 40 angezeigt.

Die Steuereinrichtung 12 kann auf die Speichereinrichtung 13 zugreifen und Daten 133 in der Speichereinrichtung 13 speichern oder Daten 31, 131 bis 133 aus ihr abrufen. Die Steuereinrichtung 12 speichert als Daten 133 beispielsweise die jeweils von der Steuereinrichtung 12 vorgegebenen Betriebsdaten, wie den Phasenanschnitt des Schweißstroms I und einen Widerstand R des Schweißwerkzeugs 21 beim Ausführen einer Schweißung oder dem Herstellen einer Schweißverbindung 7. Es sind beliebige andere vorgegebene Betriebsdaten denkbar.

Beim Schweißen empfängt die Steuereinrichtung 12 und/oder die Speichereinrichtung 13 von dem Frontend 22 bzw. der Erfassungseinrichtung 30 des Schweißwerkzeugs 21 die Erfassungsdaten 31 in Bezug auf Schweißungen, die mit dem Schweißwerkzeug 21 durchgeführt werden.

Die Steuereinrichtung 12 und/oder die Überwachungseinrichtung 15 vergleicht die Erfassungsdaten 31 mit einem Referenzschweißablauf, der in den Daten 131 für die von dem Schweißwerkzeug 21 zu verwendenden Elektrodenkappen und/oder Werkstücke 5, 6 bzw. Kombinationen von Werkstücken 5, 6 in den Daten 131 gespeichert ist. Ergibt der Vergleich, dass die Schweißqualität nicht die vorgegebenen Kriterien erfüllt, ist mit der Reinigungsvorrichtung 60 ein Reinigungsvorgang für das Schweißwerkzeug 21 durchzuführen. Hierfür und entsprechend der Erfindung hat die Reinigungsvorrichtung 60 ein Reinigungswerkzeug 61, eine Steuereinrichtung 65 und eine Erfassungseinrichtung 67. Somit kann das Schweißwerkzeug 21 unter Steuerung der Reinigungsvorrichtung 60 entsprechend bearbeitet werden, damit die Schweißanlage 2 bei den nachfolgenden Schweißvorgängen die vorgegebenen Kriterien wieder erfüllt.

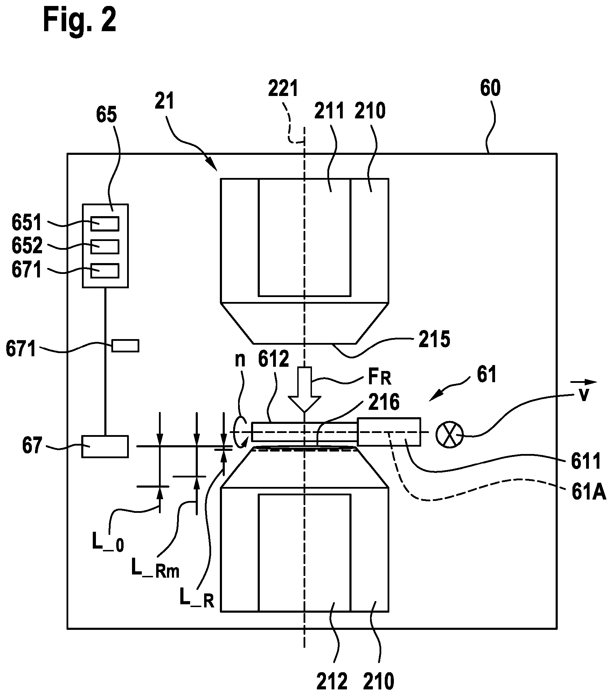

Fig. 2 zeigt den Aufbau der Reinigungsvorrichtung 60 und der Elektroden 211, 212 mit Elektrodenkappen 210 des Schweißwerkzeugs 21 bei dem vorliegenden Ausführungsbeispiel genauer. Beispielsweise ist die Elektrode 211 an einem beweglichen Zangenarm des Schweißwerkzeugs 21 montiert und die Elektrode 212 ist an einem feststehenden Zangenarm des Schweißwerkzeugs 21 montiert. Somit ist die Elektrode 211 relativ zu der Elektrode 212 bewegbar. Allgemein sind die Elektroden 211, 212 relativ zueinander bewegbar.

Gemäß Fig. 2 ist die Elektrode 211 als Elektrodenschaft ausgebildet, der an seinem einen Ende mit einer Elektrodenkappe 210 versehen ist. Die Elektrodenkappe 210 ist an der Elektrode 211 an ihrem dem Bauteil 5 zugewandten Ende angeordnet. Außerdem ist die Elektrode 212 als Elektrodenschaft ausgebildet, der mit einer Elektrodenkappe 210 versehen ist. Die Elektrodenkappe 210 ist an der Elektrode 212 an ihrem dem Bauteil 6 zugewandten Ende angeordnet. Jede der Elektrodenkappen 210 hat eine Schweißstromzuführfläche 215, auch wenn in Fig. 2 der Übersichtlichkeit halber nur die Schweißstromzuführfläche 215 der Elektrode 211 mit einem Bezugszeichen versehen ist.

Die Schweißelektrodenkappe 210 ist insbesondere zum Schweißen von Aluminium und/oder dessen Verbindungen und/oder Stahl vorgesehen. Die Schweißelektrodenkappe 210 kann beispielsweise aus einem Material gefertigt sein, welches zum Schweißen von Aluminium und/oder dessen Verbindungen und/oder Stahl geeignet ist. Insbesondere ist die Schweißelektrodenkappe 210 beispielsweise aus Kupfer-Chrom-Zirkonium (CuCrZr) gefertigt. Alternativ oder zusätzlich ist jedoch mindestens ein anderes Material für die Schweißelektrodenkappe 210 möglich.

Die Schweißelektrodenkappe 210 ist an einer der Schweißelektroden 211, 212 des Schweißwerkzeugs 21 von Fig. 1 montierbar. Die Schweißelektrodenkappe 210 wird hierfür derart an der jeweiligen Schweißelektrode 211, 212 befestigt, dass die Schweißelektrodenkappe 210 für die Durchführung eines Schweißvorgangs mit dem Schweißwerkzeug 21 an der Schweißelektrode 211, 212 genügend fest montiert ist, jedoch bei Bedarf gegen eine andere Schweißelektrodenkappe 210 austauschbar ist. Der Austausch der Schweißelektrodenkappe 210 kann insbesondere nach Abnutzung der bisher montierten Schweißelektrodenkappe 210 oder je nach Schweißaufgabe erforderlich werden, beispielsweise zum Schweißen von Werkstücken 5, 6 aus einem anderen Material als bei der vorangehenden Schweißaufgabe oder von Werkstücken 5, 6 mit einer anderen Werkstückstärke, insbesondere Blechstärke, als bei der vorangehenden Schweißaufgabe.

Je nach Schweißaufgabe ist es möglich, dass zwei Werkstücke 5, 6 aus demselben Material oder auch Materialkombinationen, wie Aluminium/Stahl usw. geschweißt werden sollen. Zudem kann die Geometrie der Schweißstromzuführfläche 215 der Elektroden 211, 212 je nach Schweißaufgabe und/oder Ausgestaltung des Schweißwerkzeugs 21 anders ausgestaltet sein als in Fig. 2 als Beispiel dargestellt.

Das Schweißwerkzeug 21 kann mit der Reinigungseinrichtung 60 derart bearbeitet werden, dass der verschmutzte Teil, wie beispielsweise die Verschmutzung 216, mindestens einer der Elektrodenkappen 210 bei Bedarf abgeschnitten oder abgefräst wird. Die Elektrodenkappen 210 sind demzufolge Verschleißobjekte. Die Reinigungseinrichtung 60 kann als Fräs- und/oder Schneideinrichtung und/oder Austauscheinrichtung ausgeführt sein.

Das Reinigungswerkzeug 61 der Reinigungsvorrichtung 60 hat eine Halterung 611 zum Halten eines Werkzeugelements 612. Das Werkzeugelement 612 ist um seine Achse 61A drehbar mit einer Anzahl von Umdrehungen n pro Zeiteinheit. Das Werkzeugelement 612 ist außerdem entlang der Schweißstromzuführfläche 215 mindestens einer der Elektrodenkappen 210 des Schweißwerkzeugs 21 bewegbar. Dabei kann das Werkzeugelement 612 mit einer Geschwindigkeit v relativ zu der Fläche 215 der Elektrodenkappe 210 bewegt werden. Bei dem Beispiel von Fig. 2 rotiert das Werkzeugelement 612 mit einer Geschwindigkeit v in Richtung der Zeichenebene von Fig. 2. Somit wird das Werkzeugelement 612 mit einer Geschwindigkeit v in die Zeichenebene von Fig. 2 bewegt. Das Reinigungswerkzeug 61 ist zudem mit einer vorbestimmten Anpresskraft F_{R} an die Fläche 215 der Elektrodenkappe 210 anpressbar. Somit kann das Reinigungswerkzeug 61 bei Durchführen eines Reinigungsvorgangs mit der vorbestimmten Anpresskraft F_{R} an die Fläche 215 der Elektrodenkappe 210 angepresst werden. Das Werkzeugelement 612 ist insbesondere ein spanabhebendes Werkzeugelement, insbesondere ein Schneidfräser oder Schneidmesser. Das Werkzeugelement 612 kann alternativ ein Laserschneider sein.

Im Betrieb der Reinigungsvorrichtung 60 zum Durchführen eines Reinigungsvorgangs kontaktiert das Reinigungswerkzeug 61, insbesondere sein Werkzeugelement 612, mindestens eine Elektrodenkappe 210 des Schweißwerkzeugs 21. Ein Reinigungsvorgang nur einer der Elektroden 211, 212, insbesondere deren Elektrodenkappe 210, des Schweißwerkzeugs 21 kann beispielsweise vorgenommen werden, wenn das Werkstück 5, 6 beim Schweißen nur einseitig zugänglich war. Das Reinigungswerkzeug 61, insbesondere sein Werkzeugelement 612, wird mit einer vorbestimmten Anpresskraft F_{R} an die Fläche 215 der mindestens einen Elektrodenkappe 210 angepresst. Ist das Schweißwerkzeugs 21 eine Schweißzange, kann das Reinigungswerkzeug 61, insbesondere sein Werkzeugelement 612, an beide Elektroden 211, 212, insbesondere deren Elektrodenkappe 210, des Schweißwerkzeugs 21 gepresst werden.

Die vorbestimmte Anpresskraft F_{R} bestimmt, wieviel der Länge L_₀ der Elektrodenkappe 210 bei dem derzeitigen Reinigungsvorgang abgenommen wird. Die Reinigungsvorrichtung 60 reduziert somit die Länge L_₀ der Elektrodenkappe 210 bei dem derzeitigen Reinigungsvorgang um beispielsweise eine Länge L__{R}. Maximal kann die Länge der Elektrodenkappe 210 um eine Länge L__{Rm}. reduziert oder gekürzt werden. Die Länge L__{Rm} kann auch als Gesamtreduktionslänge einer Elektrodenkappe 210 oder Gesamtabfräslänge einer Elektrodenkappe 210 bezeichnet werden. Somit berechnet sich die minimale Länge L_min der Elektrodenkappe 210 als L_min = L_₀ - L__{Rm}. Ist die minimale Länge L_min der Elektrodenkappe 210 erreicht, ist die Elektrodenkappe 210 noch für eine vorbestimmte Anzahl von Schweißungen verwendbar. Danach muss die Elektrodenkappe 210 ausgetauscht werden.

Somit ist die Steuereinrichtung 65, insbesondere deren Software 651, ausgestaltet zu bestimmen, wann die Elektroden 211, 212, insbesondere eine Elektrodenkappe 210 einer der Elektroden 211, 212, gewechselt werden müssen/muss. Hierfür berechnet die Steuereinrichtung 65, insbesondere deren Software 651, beispielsweise jeweils die Differenz aus der für die Elektrode 211, 212 oder deren Elektrodenkappe 210 zur Verfügung stehenden Gesamtreduktionslänge L__{Rm} und der Summe der Reinigungslängen L__{R} der bereits durchgeführten Reinigungsvorgänge T_{R}. Ist das Ergebnis 0, ist die betrachtete Elektrode 211, 212, insbesondere deren Elektrodenkappe 210, zu wechseln.

Im Betrieb der Reinigungsvorrichtung 60, insbesondere bei einem Reinigungsvorgang, erfasst die Erfassungseinrichtung 67 jeweils die Längen L_₀ und/oder L__{R}. Die Erfassungseinrichtung 67 leitet das Erfassungsergebnis 671 an die Steuereinrichtung 65. Die Steuereinrichtung 65 speichert das Erfassungsergebnis 671 in mindestens einer Speichereinrichtung. Zudem sind in der mindestens einen Speichereinrichtung eine Software 651 und/oder Parameter 652 gespeichert, mit welchen der Reinigungsvorgang mit der Reinigungsvorrichtung 60 gesteuert und/oder geregelt wird. Die Parameter 652 umfassen insbesondere Sollwerte für die Drehzahl n des Reinigungswerkzeugs 61, insbesondere dessen Werkzeugelements 612, und/oder die Geschwindigkeit v des Reinigungswerkzeugs 61, insbesondere dessen Werkzeugelements 612, und/oder die Anpresskraft F_{R} des Reinigungswerkzeugs 61 insbesondere dessen Werkzeugelements 612, an der Schweißelektrode 211, 212, insbesondere der Elektrodenkappe 210. Die Anpresskraft F_{R} des Reinigungswerkzeugs 61 kann auch als Fräskraft bezeichnet werden. Die Software 651 bestimmt, unter Verwendung der Parameter 652 und des mindestens einen Erfassungsergebnisses 671, wie das Reinigungswerkzeug 61, insbesondere dessen Werkzeugelement 612, relativ zu mindestens einer Elektrodenkappe 210 des Schweißwerkzeugs 21 einzustellen und/oder zu bewegen ist, um den Reinigungsvorgang auszuführen, wie nachfolgend genauer beschrieben.

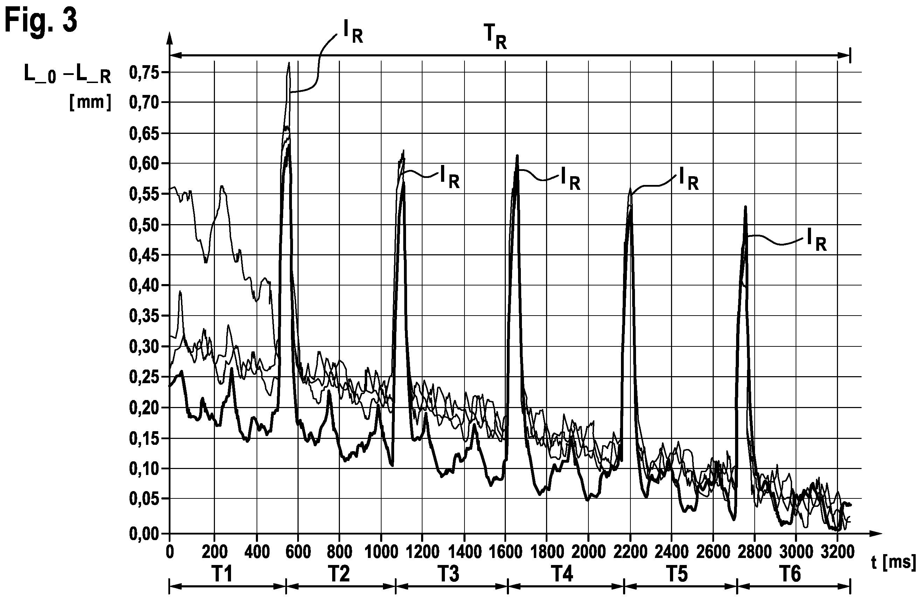

**Wie genauer** in Bezug auf Fig. 3 beschrieben, führt die Reinigungsvorrichtung 60 aufgrund ihrer zuvor beschriebenen Ausgestaltung eine adaptive Anpassung der Parameter 652 durch, so dass bei jedem Reinigungsvorgang T_{R} gemäß Fig. 3 immer die gleiche Reduktion L__{R} der Länge L_₀ der mindestens einen Elektrode 211, 212, insbesondere ihrer Elektrodenkappe 210, erreicht werden kann.

Dazu erfasst die Erfassungseinrichtung 67 während des von der Reinigungsvorrichtung 60 durchgeführten Reinigungsvorgangs T_{R}, nach festen Zeitabschnitten Tm, die bis dahin abgenommene Elektrodenlänge L__{R} oder L_₀ - L__{R}. Hierbei ist m eine natürliche Zahl größer oder gleich 1.

Fig. 3 zeigt die Elektrodenlänge L_₀ - L__{R} in mm über der Zeit t in ms. Hierbei geben die dünngezeichneten Kurven erfasste Ist-Elektrodenlängen L_₀ - L__{R} in mm für die Elektroden 211, 212 über der Zeit t in ms an. Die dickgezeichnete Kurve in Fig. 3 gibt bei dem Beispiel von Fig. 3 die Soll- Elektrodenlänge L_₀ - L__{R} in mm über der Zeit t in ms an. Die dickgezeichnete Kurve ist somit eine Referenzkurve. Alternativ dazu kann die Soll-Elektrodenlänge L_₀ - L__{R} ein fester Parameterwert sein, der sich nicht über der Zeit t ändert.

Das Beispiel von Fig. 3 umfasst sechs aufeinanderfolgende Zeitabschnitte T1 bis T6 als feste Zeitabschnitte Tm während eines von der Reinigungsvorrichtung 60 durchgeführten Reinigungsvorgangs T_{R} mit mehreren Impulsen. Ein Impuls entspricht einem Zeitabschnitt Tm, Tm+1 usw., bei dem das Reinigungswerkzeug 61, insbesondere sein Werkzeugelement 612, und die mindestens eine Kappe 210 mit der Anpresskraft F_{R} aneinander gedrückt oder gepresst wird/werden. Ein solcher Impuls oder Zeitabschnitt Tm, Tm+1 usw. kann eine Zeitdauer von beispielsweise jeweils etwa 450 ms haben. In dieser Zeitdauer kann auch die Reinigungslänge L__{R} erfasst werden, da der Weg der mindestens einen Elektrode 211, 212, insbesondere seiner Kappe 210, relativ zum Reinigungswerkzeug 61, insbesondere seinem Werkzeugelement 612, gemessen werden kann. Dann wird die Anpresskraft F_{R} an mindestens eine Kappe 210 auf nahezu 0 kN zurückgenommen. Dies ist durch die Spitzen I_{R} in den Kurven von Fig. 3 erkennbar. Ergibt sich die Anpresskraft F_{R} dadurch, dass eine Schweißzange als Schweißwerkzeug 21 an das Reinigungswerkzeug 61, insbesondere sein Werkzeugelement 612, gepresst wird, geht als Folge der nachlassenden Anpresskraft F_{R} die Schweißzange auf. Durch das Zurücknehmen der Anpresskraft F_{R} an die mindestens eine Kappe 210 auf nahezu 0 kN, wie zuvor beschrieben, wird der Weg in mm zwischen der mindestens einen Elektrode 211, 212, insbesondere seiner Kappe 210, und dem Reinigungswerkzeug 61, insbesondere seinem Werkzeugelement 612, größer. Dadurch brechen Späne, die beim Reinigen der mindestens einen Elektrode 211, 212, insbesondere deren Kappe 210, entstehen, besser (ab). Zudem kann die Adaption der Parameter 652 für den Zeitabschnitt Tm+1 erfolgen, wie nachfolgend genauer beschrieben.

Abhängig von dem mindestens einen Erfassungsergebnis 671 in dem Zeitabschnitt T1 führt die Steuereinrichtung 65 eine adaptive Anpassung der Parameter 652 für den Zeitabschnitt T2 aus, der mit einem neuen Impuls oder bei einer neuen Spitze I_{R} startet. Allgemein führt die Steuereinrichtung 65 eine adaptive Anpassung mindestens eines der Parameter 652 für den auf den derzeitigen Zeitabschnitt Tm direkt folgenden Zeitabschnitt Tm+1 aus. In anderen Worten, die Steuereinrichtung 65 führt eine adaptive Anpassung mindestens eines der Parameter 652 für den sich an den derzeitigen Zeitabschnitt Tm anschließenden Zeitabschnitt Tm+1 aus.

Zudem kann die Abmessung eines solchen Zeitabschnitts Tm anhand mindestens eines Parameters der Parameter 652 neu parametriert sein. Bei dem Beispiel von Fig. 3 ist die Abmessung jedes Zeitabschnitts Tm durch eine parametrierbare absolute Zeit Tm festgelegt.

Alternativ ist die Abmessung jedes Zeitabschnitts Tm durch eine vorbestimmte Anzahl von Umdrehung(en) U des Werkzeugelements 612 festgelegt, wobei die vorbestimmte Anzahl mindestens eine Umdrehung U ist. Somit ist auch U eine natürliche Zahl größer oder gleich 1. Bei dieser Ausgestaltung wird am Anfang einer Umdrehung U+1, die sich an die Umdrehung U anschließt, die Anpresskraft F_{R} des Reinigungswerkzeugs 61, insbesondere seines Werkzeugelements 612, zurückgenommen, so dass es zum Spanbruch kommt. Außerdem wird mindestens einer der Parameter 652 für die nächste Umdrehung U+1 adaptiert. Hierfür werden, wie zuvor beschrieben, die Erfassungsergebnisse der Erfassungseinrichtung 67 bei der Umdrehung U verwendet. Dementsprechend ist dann das Impulsschema aufgebaut.

Allgemein kann ein Reinigungsvorgang T_{R} mehr als zwei Abschnitte Tm, Tm+1 haben. Ein Zeitabschnitt, insbesondere der Abschnitt Tm und/oder der Abschnitt Tm+1, entspricht beispielsweise einer oder mehr Umdrehung(en) U des Reinigungswerkzeugs 61, insbesondere seines Werkzeugelements 612. Nach jeder Umdrehung U des Werkzeugs 61, insbesondere seines Werkzeugelements 612, kann mindestens einer der Parameter 652 für die Reinigung bei der anschließenden Umdrehung U+1 des Werkzeugs 61, insbesondere seines Werkzeugelements 612 angepasst werden, wie zuvor beschrieben. Insbesondere werden bei einem Reinigungsvorgang T_{R} eine Anzahl von 3 bis 7 Umdrehungen U durchgeführt. Die Anzahl der Umdrehungen U kann beliebig auf die Zeitabschnitte Tm, Tm+1 verteilt werden. Allgemein gilt, dass U eine natürliche Zahl größer oder gleich 1 ist.

Auf diese Weise kann die Störgröße "Verschleiß des Reinigungswerkzeugs" ausgeglichen werden. Dies erfolgt durch die Adaption der Parameter 652 wie oben beschrieben. Wird das Werkzeugelement 612, insbesondere sein Messer, stumpf, so ist dies über eine kleinere erreichte Reinigungslänge L__{R} in einem Zeitabschnitt Tm messbar. Dieser Verschleiß des Werkzeugelements 612 wird beispielsweise mit einer Erhöhung der Anpresskraft F_{R} oder der Verlängerung der Reinigungszeit, insbesondere des Reinigungsvorgangs T_{R}, ausgeglichen. Damit wird die Standzeit des Werkzeugelements 612 erhöht. Wird anschließend ein neues, insbesondere schärferes Werkzeugelement 612 verwendet, so kann dies beispielsweise mit einer Verringerung der Anpresskraft F_{R} oder der Verkürzung der Reinigungszeit, insbesondere des Reinigungsvorgangs T_{R}, ausgeglichen werden.

Optional kann die Steuereinrichtung 65, insbesondere deren Software 651 ausgestaltet sein, eine Auswertung der Änderungen der Parameter 652 für eine vorausschauende Instandhaltung des Werkzeugs 61, insbesondere seines Werkzeugelements 612, und/oder einen voraussagbaren Wechsel des Werkzeugs 61, insbesondere seines Werkzeugelements 612, durchzuführen. Überschreiten die Änderungen der Parameter 652 eine definierte Toleranzschwelle kann ein Wechsel des Werkzeugs 61, insbesondere seines Werkzeugelements 612, angezeigt werden. Die Anzeige kann insbesondere mit der Bedienungsvorrichtung 40 erfolgen.

Durch die Möglichkeit eine immer gleiche Reinigungslänge L__{R}, insbesondere Abfräslänge, zu realisieren, kann das Management der Elektrodenkappen 210 optimiert werden. Die zur Verfügung stehende Länge L_₀ der Elektrodenkappen 210 kann optimal genutzt werden.

Im Ergebnis kann die Anzahl der Reinigungszyklen, die mit einer Elektrode 211, 212 vorgenommen werden können, bestmöglich gestaltet werden. Die Elektroden 211, 212 werden vorteilhaft nur dann gewechselt, wenn notwendig.

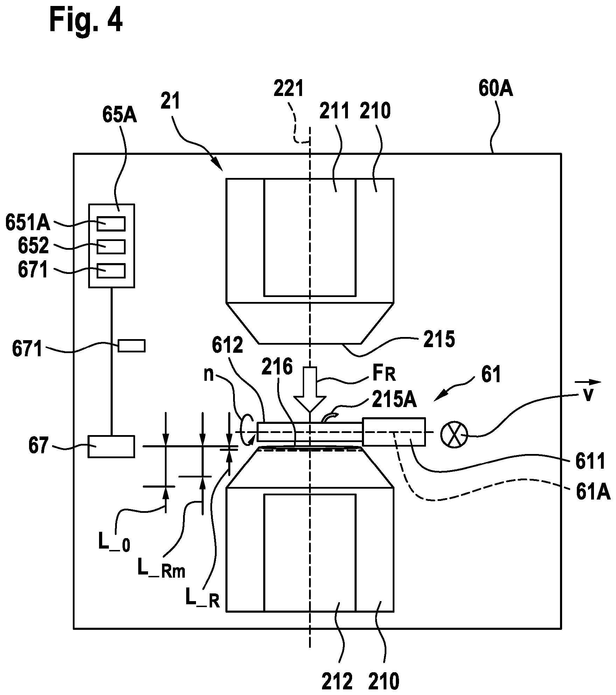

Fig. 4 zeigt den Aufbau einer Reinigungsvorrichtung 60A und der Elektroden 211, 212 mit Elektrodenkappen 210 des Schweißwerkzeugs 21 bei einem zweiten Ausführungsbeispiel. Die Reinigungsvorrichtung 60A hat eine Steuereinrichtung 65A mit einer Software 651A.

Im Unterschied zu der Reinigungsvorrichtung 60 des ersten Ausführungsbeispiels sind die Reinigungsvorrichtung 60A und ihre Steuereinrichtung 65A mit der Software 651A ausgestaltet, während eines Reinigungsvorgangs T_{R} eine variable Anpresskraft F_{R}, insbesondere Fräskraft, und Reinigungswerkzeuggeschwindigkeit v anzusteuern. Hierbei wird die Anpresskraft F_{R} und/oder die Geschwindigkeit v des Reinigungswerkzeugs, insbesondere des Werkzeugelements 612, über der Zeit t derart variabel geändert, dass nach dem Reinigungsvorgangs T_{R} keine Rückstände 215A auf der Elektrodenoberfläche, insbesondere der Schweißstromzuführfläche 215, verbleiben. Derartige Rückstände 215A, wie insbesondere ein Restspan eines spanabhebenden Werkzeugelements 612 sind Störgrößen beim Schweißen mit dem Schweißwerkzeug 21 und sind daher unerwünscht.

Hierfür kann die Anpresskraft F_{R} und/oder die Geschwindigkeit v des Reinigungswerkzeugs 61, insbesondere des Werkzeugelements 612, innerhalb mindestens einem der Zeitabschnitte Tm, Tm+1, usw. derart variiert werden/wird, dass ein Spanbruch verbessert wird. Der Spanbruch bewirkt, dass keine Rückstände 215A auf der Elektrodenoberfläche, insbesondere der Schweißstromzuführfläche 215, verbleiben, und ist zuvor in Bezug auf Fig. 3 genauer beschrieben. Alternativ oder zusätzlich kann innerhalb mindestens einem der Zeitabschnitte Tm, Tm+1, usw. die Geschwindigkeit v des Reinigungswerkzeugs 61, insbesondere des Werkzeugelements 612, derart verändert werden, dass ein Abbruch eines Spans optimiert wird. Hierfür können insbesondere Erfahrungswerte aus der Produktion verwendet werden.

Alternativ kann die Änderung die Anpresskraft F_{R} und/oder die Geschwindigkeit v des Reinigungswerkzeugs, insbesondere des Werkzeugelements 612, innerhalb mindestens einem der Zeitabschnitte Tm, Tm+1, usw. anhand von fest eingestellten Wert(en) erfolgen. In diesem Fall wird kein Erfassungsergebnis der Erfassungseinrichtung 67 verwendet.

Die Reinigungsvorrichtung 60A und ihre Steuereinrichtung 65A mit der Software 651A bewirken somit, dass der Abbruch des Spans optimiert ist. Dadurch bietet die Reinigungsvorrichtung 60A ein besseres "Spanverhalten".

Ansonsten können mit der Reinigungsvorrichtung 60A gemäß dem vorliegenden Ausführungsbeispiel die gleichen Vorteile erzielt werden, wie zuvor für die Reinigungsvorrichtung 60 gemäß dem vorangehenden Ausführungsbeispiel beschrieben.

Im Übrigen ist die Schweißanlage 2 gemäß dem vorliegenden Ausführungsbeispiel aufgebaut, wie in Bezug auf die Schweißanlage 2 gemäß dem ersten Ausführungsbeispiel beschrieben.

Alle zuvor beschriebenen Ausgestaltungen der Schweißanlage 2, der Schweißelektroden 211, 212 mit deren Schweißelektrodenkappen 210, der Reinigungsvorrichtungen 60, 60A und des von ihnen ausgeführten Verfahrens können einzeln oder in allen möglichen Kombinationen Verwendung finden. Insbesondere können alle Merkmale und/oder Funktionen der zuvor beschriebenen Ausführungsbeispiele beliebig kombiniert werden. Zusätzlich sind insbesondere folgende Modifikationen denkbar.

Die in den Figuren dargestellten Teile sind schematisch dargestellt und können in der genauen Ausgestaltung von den in den Figuren gezeigten Formen abweichen, solange deren zuvor beschriebenen Funktionen gewährleistet sind.

Es ist möglich, dass die Schweißelektrodenkappen 210 der beiden Schweißelektroden 211, 212 unterschiedlich ausgestaltet sind. Hierfür können die Schweißelektrodenkappen 210 beispielsweise Rillen an Ihrer Oberfläche haben. Eine derartige Ausgestaltung des Schweißwerkzeugs 21 ist zum Schweißen von Materialkombinationen, wie beispielsweise Stahl/Aluminium denkbar. Die Schweißelektrodenkappen 210 können unterschiedlich viele Rillen an Ihrer Oberfläche haben. Alternativ oder zusätzlich können die Schweißelektrodenkappen 210 Rillen in unterschiedlicher Anordnung an Ihrer Oberfläche haben. Alternativ oder zusätzlich können die Schweißelektrodenkappen 210 Rillen in unterschiedlicher geometrischer Ausgestaltung, insbesondere linienförmig, gebogen, usw., an Ihrer Oberfläche haben.

Die industrielle Anlage 1 weist möglicherweise anstelle des von der Vorrichtung 20 geführten Schweißwerkzeugs 21 ein Handwerkzeug auf. Die Vorrichtung 20 kann alternativ derart ausgestaltet sein, dass das Schweißwerkzeug 21 ein handgeführtes Werkzeug ist. Zusätzlich zu einer der genannten Ausführungsvarianten für das Schweißwerkzeug 21 ist es auch denkbar, dass die industrielle Anlage 1 mindestens ein weiteres Werkzeug aufweist, wie ein Schraub-, Bohr- oder Fräswerkzeug, oder Nietwerkzeug oder Schneidwerkzeug oder Toxwerkzeug oder Stanzwerkzeug.

Optional ist die Überwachungseinrichtung 15 oder eine zusätzliche Überwachungseinrichtung extern von der Schweißsteuerung 10 angeordnet. Hierbei kann die Überwachungseinrichtung 15 beispielsweise über eine Kommunikationseinrichtung auf die Steuereinrichtung 12 und die Speichereinrichtung 13 zugreifen. Jedoch ist optional stattdessen ein direkter Zugriff auf die Speichereinrichtung 13 und/oder die Steuereinrichtung 12 möglich.

Die Überwachung der Schweißqualität mit der Überwachungseinrichtung 15 ist optional parametrierbar. Die Parametrierung kann gemäß einer zuvor eingestellten Vorschrift abhängig von den jeweils vorliegenden Einstellungen der Schweißanlage 2 erfolgen. Alternativ ist die Parametrierung durch Eingaben eines Benutzers an der Bedienvorrichtung 40 vornehmbar. Ganz allgemein kann die Schweißanlage 2 ausgestaltet sein, eine Parametrierung der von der Überwachungseinrichtung 15 durchzuführenden Überwachung über die Bedienvorrichtung 40 abzufragen. Die Abfrage kann von der Überwachungseinrichtung 15 veranlasst sein. Alternativ ist die Abfrage von der Steuereinrichtung 12 veranlasst. Dadurch kann die Schärfe der Überwachung der Schweißqualität über einen Parameter an der Bedienvorrichtung 40 parametriert werden. Über diesen Parameter kann die Überwachung auch abgeschaltet werden. Die Parametrierung bezieht sich insbesondere auf ein Toleranzband für die Schweißqualität. Liegt die Schweißqualität außerhalb dieses Toleranzbands, kann die zuvor genannte Fehlermeldung 401 ausgegeben werden.

Mit der Bedienvorrichtung 40 ist mit der Fehlermeldung 401 optional nicht nur signalisierbar, dass Maßnahmen zu treffen sind, beispielsweise einen Reinigungsvorgang T_{R} der Schweißelektrodenkappen 210 durchzuführen, wenn die Schweißqualität nicht mehr die vorgegebenen Kriterien erfüllt. In einer vorteilhaften Ausgestaltung umfasst die Fehlermeldung 401 auch zumindest einen Hinweis, welche Maßnahmen zu treffen sind, um den Betrieb der Schweißanlage 2 möglichst störungsfrei aufrechtzuerhalten oder möglichst schnell wieder störungsfrei einzurichten. Die Fehlermeldung 401 ist insbesondere eine optische Meldung. Die optische Meldung kann durch einen entsprechenden Code, wie beispielsweise Farben oder eine Textmeldung in Klartext den Fehler und/oder den Hinweis angeben. Der Bediener ist dann in der Lage, die notwendigen Maßnahmen rechtzeitig oder erst nach einer gewissen Toleranzphase zu ergreifen, um den Betrieb der Schweißanlage 2 in der industriellen Anlage 1 solange wie möglich mit qualitativ hochwertigen Schweißverbindungen 7 zu gewährleisten.

## Patentansprüche

1. Reinigungsvorrichtung (60) zur Reinigung einer Schweißelektrode (211; 212) eines Schweißwerkzeugs (21), mit
einem Reinigungswerkzeug (61) zum Reinigen der Schweißelektrode (211; 212) bei einem Reinigungsvorgang (T_{R}) an einer Schweißstromzuführfläche (215), die zum Zuführen eines Schweißstroms (I) zu mindestens einem zu schweißenden Werkstück (5; 6) vorgesehen ist,
einer Steuereinrichtung (65) zur Steuerung des Reinigungsvorgangs (T_{R}), bei welchem Verschmutzung (216) an der Schweißstromzuführfläche (215) durch Kürzen einer Länge (L_₀; L_₀ - L__{R}) der Schweißelektrode (211; 212) beseitigt wird, so dass der Reinigungsvorgang (T_{R}) mindestens einen ersten Zeitabschnitt (T1) und einen sich an den ersten Zeitabschnitt (T1) anschließenden zweiten Zeitabschnitt (T2) aufweist, **und**
**gekennzeichnet durch**:
eine Erfassungseinrichtung (67) zur Erfassung, **während des von der Reinigungsvorrichtung (60) durchgeführten Reinigungsvorgangs,** einer Länge (L_{_0}; L_₀ - L_{_R}) der Schweißelektrode (211; 212) nach mindestens dem ersten Zeitabschnitt (T1),
wobei die Steuereinrichtung (65) zudem ausgestaltet ist, das Reinigungswerkzeug (61) in dem zweiten Zeitabschnitt (T2) unter Verwendung von mindestens einem Parameter (652) anzusteuern, der auf der Grundlage eines Reinigungsergebnisses der Reinigung der Schweißstromzuführfläche (215) in dem ersten Zeitabschnitt (T1) eingestellt wurde,
**wobei die Reinigungsvorrichtung (60) ausgestaltet ist, den Reinigungsvorgang derart durchzuführen,**
**dass in dem ersten Zeitabschnitt (T1) das Reinigungswerkzeug (61) und eine Kappe (210) der Schweißelektrode (211; 212) mit einer Anpresskraft (F_{R}) aneinander gedrückt oder gepresst werden und dann die Anpresskraft (F_{R}) an die Kappe (210) auf nahezu 0 KN zurückgenommen wird, so dass der Weg in mm zwischen der Kappe (210) und dem Reinigungswerkzeug (61) größer wird, und**
**dass in dem zweiten Zeitabschnitt (T2) das Reinigungswerkzeug (61) und die Kappe (210) der Schweißelektrode (211; 212) mit einer Anpresskraft (F_{R}) aneinander gedrückt oder gepresst werden und dann die Anpresskraft (F_{R}) an die Kappe (210) auf nahezu 0 KN zurückgenommen wird, so dass der Weg in mm zwischen der Kappe (210) und dem Reinigungswerkzeug (61) größer wird,** so dass Späne, die beim Reinigen der Kappe (210) der Elektrode (211, 212) entstehen, besser brechen bzw. abbrechen, und
wobei die Steuereinrichtung (65) ausgestaltet ist, das Reinigungswerkzeug (61) in dem zweiten Zeitabschnitt (T2) unter Verwendung von mindestens einem Parameter (652) anzusteuern, der auf der Grundlage des nach dem ersten Zeitabschnitt (T1) erfassten Erfassungsergebnisses (671) der Erfassungseinrichtung (67) eingestellt wurde.

2. Reinigungsvorrichtung (60) nach Anspruch 1,
wobei das Reinigungswerkzeug (61) zum Reinigen einer Elektrodenkappe (210) der Schweißelektrode (211; 212) ausgestaltet ist, und
wobei die Schweißstromzuführfläche (215) Teil der Elektrodenkappe (210) ist.

3. Reinigungsvorrichtung (60) nach Anspruch 2, wobei die Steuereinrichtung (65) ausgestaltet ist, auf der Grundlage des Erfassungsergebnisses (671) der Erfassungseinrichtung (67) zu bestimmen, wann die Elektrodenkappe (210) der Schweißelektrode (211; 212) auszuwechseln ist.

4. Reinigungsvorrichtung (60) nach einem der vorangehenden Ansprüche, wobei die Steuereinrichtung (65) ausgestaltet ist, auf der Grundlage mindestens einer Änderung der in den Zeitabschnitten (T1, T2) verwendeten Parameter (652) zu bestimmen, wann das Reinigungswerkzeug (61) oder sein Werkzeugelement (612) auszuwechseln ist.

5. Reinigungsvorrichtung (60) nach einem der vorangehenden Ansprüche, wobei der mindestens eine Parameter (652) mindestens einen der folgenden Parameter (652) aufweist, nämlich Anpresskraft (F_{R}) des Reinigungswerkzeugs (61) an der zu reinigenden Schweißstromzuführfläche (215) in dem ersten Zeitabschnitt (T1), Anzahl der Umdrehungen (n) eines Werkzeugelements (612) des Reinigungswerkzeugs (61) in dem ersten Zeitabschnitt (T1), Geschwindigkeit (v) des Reinigungswerkzeugs (61) in dem ersten Zeitabschnitt (T1), zeitliche Länge des ersten Zeitabschnitts (T1).

6. Reinigungsvorrichtung (60) nach einem der vorangehenden Ansprüche,
wobei alle Zeitabschnitte (T1 bis T6) eines Reinigungsvorgangs (T_{R}) jeweils dieselbe Abmessung haben, und
wobei die Abmessung der Zeitabschnitte (T1 bis T6) gleich einer vorbestimmten zeitlichen Länge ist.

7. Reinigungsvorrichtung (60) nach einem der Ansprüche 1 bis 5,
wobei alle Zeitabschnitte (T1 bis T6) eines Reinigungsvorgangs (T_{R}) jeweils dieselbe Abmessung haben, und
wobei die Abmessung der Zeitabschnitte (T1 bis T6) gleich mindestens einer Umdrehung eines Werkzeugelements (612) des Reinigungswerkzeugs (61) ist.

8. Reinigungsvorrichtung (60) nach einem der vorangehenden Ansprüche, wobei das Reinigungswerkzeug (61) einen Schneidfräser oder ein Schneidmesser aufweist oder ein Laserschneidwerkzeug ist.

9. Reinigungsvorrichtung (60) nach einem der vorangehenden Ansprüche, wobei die Steuereinrichtung (65) ausgestaltet ist, die Anpresskraft (F_{R}) des Reinigungswerkzeugs (61) an der zu reinigenden Schweißstromzuführfläche (215) und die Geschwindigkeit (v) des Reinigungswerkzeugs (61) in dem mindestens einen ersten Zeitabschnitt (T1) und dem darauf folgenden zweiten Zeitabschnitt (T2) variabel anzusteuern, um einen Restspan oder Schneidrückstand (215A) auf der Schweißstromzuführfläche (215) zu verhindern.

10. Schweißanlage (2) für eine industrielle Anlage (1), mit
einem Schweißwerkzeug (21) zur Herstellung mindestens einer Schweißverbindung (7) an mindestens einem Werkstück (5; 5, 6), mit mindestens einer Schweißelektrode (211; 212),
einem Schweißtransformator (24) zum Versorgen des Schweißwerkzeugs (21) mit einem Schweißstrom (I) zur Herstellung der Schweißverbindung (7),
einer Schweißsteuerung (10) zur Steuerung des Schweißtransformators (24) und des Schweißwerkzeugs (21) der Schweißanlage (2),
einer Überwachungseinrichtung (15) zur Überwachung der Schweißqualität der mit dem Schweißwerkzeug (21) hergestellten Schweißverbindung (7) und Ausgabe einer Meldung (401) in Bezug auf das Überwachungsergebnis,
**gekennzeichnet durch**:
einer Reinigungsvorrichtung (60) nach einem der vorangehenden Ansprüche.

11. Schweißanlage (2) nach Anspruch 10,
wobei die Schweißanlage (2) das Schweißwerkzeug (21) und die Reinigungsvorrichtung (60) derart steuert, dass die Reinigungsvorrichtung (60) die Schweißstromzuführfläche (215) mit dem Reinigungswerkzeug (61) reinigt, wenn ein Überwachungsergebnis der Überwachungseinrichtung (15) ergibt, dass die Schweißqualität der mit dem Schweißwerkzeug (21) hergestellten Schweißverbindung (7) ein vorbestimmtes Kriterium nicht erfüllt.

12. Schweißanlage (2) nach Anspruch 10 oder 11,
wobei die Überwachungseinrichtung (15) extern von einer Steuereinrichtung (12) der Schweißsteuerung (10) vorgesehen ist, und/oder
zudem mit einer Bedienvorrichtung (40) zur Ausgabe der Meldung (401) in Bezug auf das Überwachungsergebnis als durch menschliche Sinne wahrnehmbaren Ausgabe, und/oder
wobei die Schweißanlage (2) ausgestaltet ist, eine Parametrierung der von der Überwachungseinrichtung (15) durchzuführenden Überwachung auf der Grundlage von Eingaben an einer Bedienvorrichtung (40) vorzunehmen.

13. Schweißanlage (2) nach einem der Ansprüche 10 bis 12, zudem mit
einer Vorrichtung (20), die einen Arm (25) zum Bewegen des Schweißwerkzeugs (21) im Raum und eine Vorrichtungssteuereinrichtung (26) zur Steuerung des Arms (25) aufweist, wobei die Vorrichtungssteuereinrichtung (26) der Schweißsteuerung (10) untergeordnet ist, und/oder
einer Erfassungseinrichtung (30) zur Erfassung von Größen beim Herstellen einer Schweißverbindung (7) mit dem Schweißwerkzeug (21), wobei die Schweißsteuerung (10) ausgestaltet ist, die erfassten Größen beim Steuern des Schweißwerkzeugs (21) zu berücksichtigen.

14. Verfahren zum Reinigen einer Schweißelektrode (211; 212) für ein Schweißwerkzeug (21), das zur Herstellung mindestens einer Schweißverbindung (7) an mindestens einem Werkstück (5; 5, 6) vorgesehen ist, wobei das Verfahren die Schritte aufweist
Reinigen, mit einem Reinigungswerkzeug (61), der Schweißelektrode (211; 212) bei einem Reinigungsvorgang (T_{R}) an einer Schweißstromzuführfläche (215), die zum Zuführen eines Schweißstroms (I) zu mindestens einem zu schweißenden Werkstück (5; 6) vorgesehen ist,
**gekennzeichnet durch**:
Erfassen, mit einer Erfassungseinrichtung (67), **während des** von **der Reinigungsvorrichtung** (60) **durchgeführten Reinigungsvorgangs,** einer Länge (L_{_0}; L_₀ - L_{_R}) der Schweißelektrode (211; 212) nach mindestens einem ersten Zeitabschnitt (T1),
wobei der Reinigungsvorgang (T_{R}), bei welchem Verschmutzung (216) an der Schweißstromzuführfläche (215) durch Kürzen einer Länge (L_{_0}; L_₀ - L_{_R}) der Schweißelektrode (211; 212) beseitigt wird, durch eine Steuereinrichtung (65) derart gesteuert wird, dass der Reinigungsvorgang (T_{R}) mindestens den ersten Zeitabschnitt (T1) und einen darauf folgenden zweiten Zeitabschnitt (T2) aufweist,
wobei die Steuereinrichtung (65) das Reinigungswerkzeug (61) in dem zweiten Zeitabschnitt (T2) unter Verwendung von mindestens einem Parameter (652) ansteuert, der auf der Grundlage eines Reinigungsergebnisses der Reinigung der Schweißstromzuführfläche (215) in dem ersten Zeitabschnitt (T1) eingestellt wurde,
wobei die Reinigungsvorrichtung (60) den Reinigungsvorgang derart durchführt,
dass in dem ersten Zeitabschnitt (T1) das Reinigungswerkzeug (61) und eine Kappe (210) der Schweißelektrode (211; 212) mit einer Anpresskraft (F_{R}) aneinander gedrückt oder gepresst werden und dann die Anpresskraft (F_{R}) an die Kappe (210) auf nahezu 0 kN zurückgenommen wird, so dass der Weg in mm zwischen der Kappe (210) und dem Reinigungswerkzeug (61) größer wird, und
dass in dem zweiten Zeitabschnitt (T2) das Reinigungswerkzeug (61) und die Kappe (210) der Schweißelektrode (211; 212) mit einer Anpresskraft (F_{R}) aneinander gedrückt oder gepresst werden und dann die Anpresskraft (F_{R}) an die Kappe (210) auf nahezu 0 kN zurückgenommen wird, so dass der Weg in mm zwischen der Kappe (210) und dem Reinigungswerkzeug (61) größer wird, und
wobei die Steuereinrichtung (65) das Reinigungswerkzeug (61) in dem zweiten Zeitabschnitt (T2) unter Verwendung von mindestens einem Parameter (652) ansteuert, der auf der Grundlage des nach dem ersten Zeitabschnitt (T1) erfassten Erfassungsergebnisses (671) der Erfassungseinrichtung (67) eingestellt wurde.

## Claims

1. Cleaning device (60) for cleaning a welding electrode (211; 212) of a welding tool (21), having
a cleaning tool (61) for cleaning the welding electrode (211; 212) during a cleaning procedure (T_{R}) on a welding current supply surface (215) which is provided to supply a welding current (I) to at least one workpiece (5; 6) to be welded,
a control device (65) for controlling the cleaning procedure (T_{R}), in which contamination (216) on the welding current supply surface (215) is eliminated by shortening a length (L_{_0}; L_₀ - L_{_R}) of the welding electrode (211; 212) in such a way that the cleaning procedure (T_{R}) comprises at least one first time period (T1) and a second time period (T2) following the first time period (T1), and
**characterized by**:
a detection device (67) for detecting, during the cleaning procedure carried out by the cleaning device (60), a length (L_ ₀; L_₀ - L_{_R}) of the welding electrode (211; 212) after at least the first time period (T1),
wherein the control device (65) is moreover designed to actuate the cleaning tool (61) in the second time period (T2) while using at least one parameter (652) which has been adjusted on the basis of a cleaning result of cleaning the welding current supply surface (215) in the first time period (T1),
wherein the cleaning device (60) is designed to carry out the cleaning procedure in such a manner
that during the first time period (T1) the cleaning tool (61) and a cap (210) of the welding electrode (211; 212) are pressed together or compressed with a contact force (F_{R}), and then the contact force (F_{R}) acting on the cap (210) is reduced to almost 0 kN, so that the distance in mm between the cap (210) and the cleaning tool (61) is increased, and
that during the second time period (T2) the cleaning tool (61) and the cap (210) of the welding electrode (211; 212) are pressed together or compressed with a contact force (F_{R}), and then the contact force (F_{R}) acting on the cap (210) is reduced to almost 0 kN, so that the distance in mm between the cap (210) and the cleaning tool (61) is increased, so that chips produced when cleaning the cap (210) of the electrode (211, 212) break, or break off, more easily,
and
wherein the control device (65) is designed to control the cleaning tool (61) in the second time period (T2) while using at least one parameter (652) which has been adjusted on the basis of the detection result (671) detected by the detection device (67) after the first time period (T1).

2. Cleaning device (60) according to Claim 1,
wherein the cleaning tool (61) is designed for cleaning an electrode cap (210) of the welding electrode (211; 212), and
wherein the welding current supply surface (215) is part of the electrode cap (210).

3. Cleaning device (60) according to Claim 2, wherein the control device (65) is designed, on the basis of the detection result (671) of the detection device (67), to determine when the electrode cap (210) of the welding electrode (211; 212) is to be replaced.

4. Cleaning device (60) according to one of the preceding claims, wherein the control device (65) is designed, on the basis of at least one change of the parameters (652) used in the time periods (T1, T2), to determine when the cleaning tool (61), or its tool element (612), is to be replaced.

5. Cleaning device (60) according to one of the preceding claims, wherein the at least one parameter (652) has at least one of the following parameters (652), namely contact force (F_{R}) of the cleaning tool (61) on the welding current supply surface (215) to be cleaned in the first period (T1), number of revolutions (n) of a tool element (612) of the cleaning tool (61) in the first time period (T1), speed (v) of the cleaning tool (61) in the first time period (T1), time length of the first time period (T1).

6. Cleaning device (60) according to one of the preceding claims,
wherein all time periods (T1 to T6) of a cleaning procedure (T_{R}) have the same dimension, and
wherein the dimension of the time periods (T1 to T6) is equal to a predetermined time length.

7. Cleaning device (60) according to one of Claims 1 to 5,
wherein all time periods (T1 to T6) of a cleaning procedure (T_{R}) have the same dimension, and
wherein the dimension of the time periods (T1 to T6) is equal to at least one revolution of a tool element (612) of the cleaning tool (61).

8. Cleaning device (60) according to any one of the preceding claims, wherein the cleaning tool (61) has a milling cutter or a cutting blade, or is a laser cutting tool.

9. Cleaning device (60) according to one of the preceding claims, wherein the control device (65) is designed to variably actuate the contact force (F_{R}) of the cleaning tool (61) on the welding current supply surface (215) to be cleaned and the speed (v) of the cleaning tool (61) in the at least one first time period (T1) and the subsequent second time period (T2), in order to prevent residual chips or cutting residue (215A) on the welding current supply surface (215).

10. Welding installation (2) for an industrial plant (1), having
a welding tool (21) for establishing at least one welded connection (7) on at least one workpiece (5; 5, 6), having at least one welding electrode (211; 212),
a welding transformer (24) for supplying the welding tool (21) with a welding current (I) for establishing the welded connection (7),
a welding controller (10) for controlling the welding transformer (24) and the welding tool (21) of the welding installation (2),
a monitoring device (15) for monitoring the welding quality of the welded connection (7) established with the welding tool (21), and for outputting a message (401) with regard to the monitoring result;
**characterized by**:
a cleaning device (60) according to one of the preceding claims.

11. Welding installation (2) according to Claim 10,
wherein the welding installation (2) controls the welding tool (21) and the cleaning device (60) in such a manner that the cleaning device (60) cleans the welding current supply surface (215) with the cleaning tool (61) when a monitoring result of the monitoring device (15) shows that the welding quality of the welded connection (7) established with the welding tool (21) does not meet a predetermined criterion.

12. Welding installation (2) according to Claim 10 or 11,
wherein the monitoring device (15) is provided externally to a control device (12) of the welding controller (10), and/or
moreover having an operating device (40) for the output of the message (401) with respect to the monitoring result as an output perceptible by human senses, and/or
wherein the welding installation (2) is designed to parametrize the monitoring to be carried out by the monitoring device (15) on the basis of inputs at an operating device (40).

13. Welding installation(2) according to one of Claims 10 to 12, moreover having
an apparatus (20) which has an arm (25) for moving the welding tool (21) in space, and an apparatus control device (26) for controlling the arm (25), wherein the apparatus control device (26) is subordinate to the welding controller (10), and/or
a detection device (30) for detecting variables when establishing a welded connection (7) with the welding tool (21), wherein the welding controller (10) is designed to take the detected variables into account when controlling the welding tool (21).

14. Method for cleaning a welding electrode (211; 212) for a welding tool (21) which is provided for establishing at least one welded connection (7) on at least one workpiece (5; 5, 6), the method comprising the following steps:
cleaning, using a cleaning tool (61), the welding electrode (211; 212) during a cleaning procedure (T_{R}) on a welding current supply surface (215), which is provided to supply a welding current (I) to at least one workpiece (5; 6) to be welded,
**characterized by**:
detecting, using a detection device (67), during the cleaning procedure carried out by the cleaning device (60) a length (L_ ₀; L_ ₀ - L_ _{R}) of the welding electrode (211; 212) after at least one first time period (T1),
wherein the cleaning procedure (T_{R}), in which contamination (216) on the welding current supply surface (215) is eliminated by shortening a length (L_{_0}; L_₀ - L__{R}) of the welding electrode (211; 212), controlled by a control device (65) in such a manner that the cleaning procedure (T_{R}) comprises at least the first time period (T1) and a subsequent second time period (T2),
wherein the control device (65) controls the cleaning tool (61) in the second time period (T2) while using at least one parameter (652) which has been adjusted on the basis of a cleaning result of cleaning the welding current supply surface (215) in the first time period (T1),
wherein the cleaning device (60) carries out the cleaning procedure in such a manner
that during the first time period (T1) the cleaning tool (61) and a cap (210) of the welding electrode (211; 212) are pressed together or compressed with a contact force (F_{R}), and then the contact force (F_{R}) acting on the cap (210) is reduced to almost 0 kN, so that the distance in mm between the cap (210) and the cleaning tool (61) is increased, and
that during the second time period (T2) the cleaning tool (61) and the cap (210) of the welding electrode (211; 212) are pressed together or compressed with a contact force (F_{R}), and then the contact force (F_{R}) acting on the cap (210) is reduced to almost 0 kN, so that the distance in mm between the cap (210) and the cleaning tool (61) is increased, and
wherein the control device (65) actuates the cleaning tool (61) in the second time period (T2) while using at least one parameter (652) which has been adjusted on the basis of the detection result (671) of the detection device (67) detected after the first time period (T1).

## Revendications

1. Dispositif de nettoyage (60) pour nettoyer une électrode de soudage (211 ; 212) d'un outil de soudage (21), comprenant
un outil de nettoyage (61) pour nettoyer l'électrode de soudage (211 ; 212) lors d'un processus de nettoyage (T_{R}) sur une surface (215) d'alimentation en courant de soudage qui est prévue pour alimenter en courant de soudage (I) au moins une pièce à souder (5 ; 6),
un dispositif de commande (65) pour commander le processus de nettoyage (T_{R}), un encrassement (216) sur la surface (215) d'alimentation en courant de soudage étant éliminé en raccourcissant une longueur (L_₀ ; L_₀ -L__{R}) de l'électrode de soudage (211 ; 212), de telle sorte que le processus de nettoyage (T_{R}) comprend au moins une première période de temps (T1) et une deuxième période de temps (T2) qui suit la première période de temps (T1), et
**caractérisé par** :
un dispositif de détection (67) pour détecter, pendant le processus de nettoyage effectué par le dispositif de nettoyage (60), une longueur (L_₀ ; L_₀ - L__{R}) de l'électrode de soudage (211 ; 212) après au moins la première période de temps (T1),
le dispositif de commande (65) étant en outre conçu pour commander l'outil de nettoyage (61) dans la deuxième période de temps (T2) en utilisant au moins un paramètre (652) qui a été défini sur la base d'un résultat de nettoyage du nettoyage de la surface (215) d'alimentation en courant de soudage dans la première période de temps (T1),
le dispositif de nettoyage (60) étant conçu pour exécuter le processus de nettoyage de telle sorte
que, dans la première période de temps (T1), l'outil de nettoyage (61) et un capuchon (210) de l'électrode de soudage (211 ; 212) sont pressés ou enfoncés l'un contre l'autre avec une force de pression (F_{R}), puis la force de pression (F_{R}) exercée sur le capuchon (210) est ramenée à pratiquement 0kN, de telle sorte que la distance en mm entre le capuchon (210) et l'outil de nettoyage (61) augmente, et
que, dans la deuxième période de temps (T2), l'outil de nettoyage (61) et le capuchon (210) de l'électrode de soudage (211 ; 212) sont pressés ou enfoncés l'un contre l'autre avec une force de pression (F_{R}), puis la force de pression (F_{R}) exercée sur le capuchon (210) est ramenée à pratiquement 0kN, de sorte que la distance en mm entre le capuchon (210) et l'outil de nettoyage (61) augmente, de sorte que les copeaux qui se forment lors du nettoyage du capuchon (210) de l'électrode (211, 212) se cassent ou se brisent plus facilement,
et
le dispositif de commande (65) étant conçu pour commander l'outil de nettoyage (61) dans la deuxième période de temps (T2) en utilisant au moins un paramètre (652) qui a été défini sur la base du résultat de détection (671) du dispositif de détection (67) enregistré après la première période de temps (T1).

2. Dispositif de nettoyage (60) selon la revendication 1,
dans lequel l'outil de nettoyage (61) est conçu pour nettoyer un capuchon d'électrode (210) de l'électrode de soudage (211 ; 212), et
dans lequel la surface (215) d'alimentation en courant de soudage fait partie du capuchon d'électrode (210).

3. Dispositif de nettoyage (60) selon la revendication 2, dans lequel le dispositif de commande (65) est conçu pour déterminer, sur la base du résultat de détection (671) du dispositif de détection (67), quand le capuchon d'électrode (210) de l'électrode de soudage (211 ; 212) doit être remplacé.

4. Dispositif de nettoyage (60) selon l'une des revendications précédentes, dans lequel le dispositif de commande (65) est conçu pour déterminer, sur la base d'au moins une modification des paramètres (652) utilisés dans les périodes de temps (T1, T2), quand l'outil de nettoyage (61) ou son élément d'outil (612) doit être remplacé.

5. Dispositif de nettoyage (60) selon l'une des revendications précédentes, dans lequel ledit au moins un paramètre (652) comprend au moins l'un des paramètres suivants (652), à savoir la force de pression (F_{R}) de l'outil de nettoyage (61) sur la surface (215) d'alimentation en courant de soudage à nettoyer dans la première période de temps (T1), le nombre de tours (n) d'un élément d'outil (612) de l'outil de nettoyage (61) dans la première période de temps (T1), la vitesse (v) de l'outil de nettoyage (61) dans la première période de temps (T1), la durée de la première période de temps (T1).

6. Dispositif de nettoyage (60) selon l'une des revendications précédentes,
dans lequel toutes les périodes de temps (T1 à T6) d'un processus de nettoyage (T_{R}) ont chacune la même dimension, et
dans lequel la dimension des périodes de temps (T1 à T6) est égale à une durée prédéterminée.

7. Dispositif de nettoyage (60) selon l'une des revendications 1 à 5,
dans lequel toutes les périodes de temps (T1 à T6) d'un processus de nettoyage (T_{R}) ont chacune la même dimension, et
dans lequel la dimension des intervalles de temps (T1 à T6) est égale à au moins une rotation d'un élément d'outil (612) de l'outil de nettoyage (61).

8. Dispositif de nettoyage (60) selon l'une des revendications précédentes, dans lequel l'outil de nettoyage (61) comprend une fraise ou une lame de coupe ou est un outil de coupe au laser.

9. Dispositif de nettoyage (60) selon l'une des revendications précédentes, dans lequel le dispositif de commande (65) est conçu de façon à commander de manière variable la force de pression (F_{R}) de l'outil de nettoyage (61) sur la surface (215) d'alimentation en courant de soudage à nettoyer et la vitesse (v) de l'outil de nettoyage (61) dans au moins une première période de temps (T1) et la deuxième période de temps (T2) qui suit, afin d'éviter un résidu ou un reste de coupe (215A) sur la surface (215) d'alimentation en courant de soudage.

10. Installation de soudage (2) pour une installation industrielle (1), comprenant
un outil de soudage (21) pour réaliser au moins une liaison soudée (7) sur au moins une pièce (5 ; 5, 6), comprenant au moins une électrode de soudage (211 ; 212),
un transformateur de soudage (24) pour alimenter l'outil de soudage (21) en courant de soudage (I) afin de réaliser la liaison soudée (7),
une commande de soudage (10) pour commander le transformateur de soudage (24) et l'outil de soudage (21) de l'installation de soudage (2),
un dispositif de surveillance (15) pour surveiller la qualité de soudage de la liaison soudée (7) réalisée avec l'outil de soudage (21) et émettre un message (401) concernant le résultat de la surveillance,
**caractérisée par** :
un dispositif de nettoyage (60) selon l'une des revendications précédentes.

11. Installation de soudage (2) selon la revendication 10,
l'installation de soudage (2) commandant l'outil de soudage (21) et le dispositif de nettoyage (60) de telle sorte que le dispositif de nettoyage (60) nettoie la surface (215) d'alimentation en courant de soudage avec l'outil de nettoyage (61) lorsqu'un résultat de surveillance du dispositif de surveillance (15) indique que la qualité de soudage de la liaison soudée (7) réalisée au moyen de l'outil de soudage (21) ne satisfait pas à un critère prédéfini.

12. Installation de soudage (2) selon la revendication 10 ou la revendication 11,
dans laquelle le dispositif de surveillance (15) est placé à l'extérieur d'un dispositif de commande (12) de la commande de soudage (10), et/ou
comprenant en outre un dispositif de commande (40) pour émettre le message (401) relatif au résultat de la surveillance sous une forme perceptible par les sens humains, et/ou
l'installation de soudage (2) étant conçue pour effectuer un paramétrage de la surveillance à effectuer par le dispositif de surveillance (15) sur la base d'entrées sur un dispositif de commande (40).

13. Installation de soudage (2) selon l'une des revendications 10 à 12, comprenant en outre
un dispositif (20) qui comprend un bras (25) pour déplacer l'outil de soudage (21) dans l'espace et un dispositif de commande (26) pour commander le bras (25), le dispositif de commande (26) étant subordonné à la commande de soudage (10), et/ou
un dispositif de détection (30) pour détecter des variables lors de la réalisation d'une liaison soudée (7) avec l'outil de soudage (21), la commande de soudage (10) étant conçue pour prendre en compte les variables détectées lors de la commande de l'outil de soudage (21).

14. Procédé de nettoyage d'une électrode de soudage (211 ; 212) pour un outil de soudage (21) qui est prévu pour réaliser au moins une liaison soudée (7) sur au moins une pièce (5 ; 5, 6), le procédé comprenant les étapes suivantes
nettoyage, au moyen d'un outil de nettoyage (61), de l'électrode de soudage (211 ; 212) lors d'un processus de nettoyage (T_{R}) sur une surface (215) d'alimentation en courant de soudage qui est prévue pour fournir un courant de soudage (I) à au moins une pièce à souder (5 ; 6),
**caractérisé par** :
la détection, au moyen d'un dispositif de détection (67), pendant le processus de nettoyage effectué par le dispositif de nettoyage (60), d'une longueur (L_₀ ; L_₀ - L__{R}) de l'électrode de soudage (211 ; 212) après au moins une première période de temps (T1),
le processus de nettoyage (T_{R}), au cours duquel l'encrassement (216) sur la surface (215) d'alimentation en courant de soudage est éliminé par raccourcissement d'une longueur (L_₀ ; L_₀ - L__{R}) de l'électrode de soudage (211 ; 212), étant commandé par un dispositif de commande (65) de telle sorte que le processus de nettoyage (T_{R}) comprend au moins la première période de temps (T1) et une deuxième période de temps (T2) qui suit,
le dispositif de commande (65) commandant l'outil de nettoyage (61) dans la deuxième période de temps (T2) en utilisant au moins un paramètre (652) qui a été réglé sur la base d'un résultat de nettoyage du nettoyage de la surface (215) d'alimentation en courant de soudage dans la première période de temps (T1),
le dispositif de nettoyage (60) exécutant le processus de nettoyage de telle sorte
que, dans la première période de temps (T1), l'outil de nettoyage (61) et un capuchon (210) de l'électrode de soudage (211 ; 212) sont pressés ou enfoncés l'un contre l'autre avec une force de pression (F_{R}), puis la force de pression (F_{R}) exercée sur le capuchon (210) est ramenée à pratiquement 0kN, de telle sorte que la distance en mm entre le capuchon (210) et l'outil de nettoyage (61) augmente, et
que, dans la deuxième période de temps (T2), l'outil de nettoyage (61) et le capuchon (210) de l'électrode de soudage (211 ; 212) sont pressés ou enfoncés l'un contre l'autre avec une force de pression (F_{R}), puis la force de pression (F_{R}) exercée sur le capuchon (210) est ramenée à pratiquement 0kN, de sorte que la distance en mm entre le capuchon (210) et l'outil de nettoyage (61) augmente, et
le dispositif de commande (65) commandant l'outil de nettoyage (61) dans la deuxième période de temps (T2) en utilisant au moins un paramètre (652) qui a été défini sur la base du résultat de détection (671) du dispositif de détection (67) enregistré après la première période de temps (T1).
